# EUROPÄISCHE PATENTSCHRIFT

(11) **EP 0 607 114 B1**
(45) Veröffentlichungstag und Bekanntmachung des Hinweises auf die Patenterteilung: **18.12.1996**
(21) Anmeldenummer: 94890001.4
(22) Anmeldetag: 03.01.1994
(51) Int. Cl.: G02C 5/22

(54) **Scharniergelenk zwischen zwei Teilen eines Brillengestells**
Hinge between two parts of a spectacle frame
Charnière entre deux parties d'une monture de lunettes

(30) Priorität: 15.01.1993 AT 54/93
(43) Veröffentlichungstag der Anmeldung: 20.07.1994
(73) Patentinhaber: SILHOUETTE INTERNATIONAL GESELLSCHAFT m.b.H., A-4021 Linz (AT)
(72) Erfinder: Hofmaier, Herbert, A-4030 Linz (AT); Fuchs, Gerhard, A-4061 Pasching (AT)
(74) Vertreter: Hübscher, Gerhard, Dipl.-Ing.

(56) Entgegenhaltungen:
- EP-A- 0 495 767
- FR-A- 1 126 049
- FR-A- 2 626 682
- GB-A- 734 208
- US-A- 2 210 507
- US-A- 4 084 889

## Beschreibung

Die Erfindung bezieht sich auf ein Scharniergelenk zwischen zwei Teilen eines Brillengestells nach dem Oberbegriff von Anspruch 1.

Um den Bügel eines Brillengestells mit den Bügelbacken über das zwischen diesen Teilen vorgesehene Scharniergelenk in einfacher Weise verbinden zu können, ist es bekannt (EP-A-0 495 767), an den Bügelbacken einen gegen den Bügel vorragenden Scharnierlappen vorzusehen, der nach oben und unten vorragende, die Scharnierachse bildende Achsstummel trägt, während im Bügel eine Aufnahmetasche für den Scharnierlappen ausgespart ist. Die Achsstummel der Scharnierlappen greifen dabei in entsprechende Lagerausnehmungen ein, die als von der Aufnahmetasche ausgehende Sacklöcher ausgebildet sind. Zum Einführen der Achsstummel in diese Sacklöcher ist die Aufnahmetasche mit Einführnuten versehen, die von der Innenseite des Bügels ausgehen und sich bis zu den Sacklöchern erstrecken, so daß die Achsstummel aufgrund einer hiefür vorgesehenen Einlaufsteigung der Einführnuten beim Erreichen der Sacklöcher in diese schnappverschlußartig einrasten. Bei solchen Konstruktionen besteht die Gefahr, daß die Achsstummel des backenseitigen Scharnierlappens bei einem Verschwenken des Bügels über die anschlagbegrenzte Strecklage des Scharniergelenkes hinaus aus den Lagerausnehmungen herausgedrückt werden, so daß sich der Bügel vom übrigen Brillengestell löst, weil die Eingriffslänge der Achsstummel in die Sacklöcher wegen der für das schnappverschlußartige Einrasten der Achsstummel in die Sacklöcher erforderlichen axialen Einfederung der Achsstummel bzw. der Lochwandung der Sacklöcher notwendigerweise begrenzt und für höhere Belastungen unzureichend ist. Der Bügel kann zwar wieder auf den backenseitigen Scharnierlappen zum Einrasten der Achsstummel in die Sacklöcher aufgesteckt werden, doch läßt sich bei einem wiederholten Ausrasten der Scharnierteile ein Ausleiern der Gelenkverbindung nicht vermeiden, was unter Umständen die ordnungsgemäße Brillenbenützung gefährdet.

Um einen besseren Halt der Achsstummel in den Lagerausnehmungen zu erreichen, wurde bereits vorgeschlagen (FR-B-1 126 049), radial offene Lagerausnehmungen zur Aufnahme der Achsstummel vorzusehen. Die Achsstummel greifen allerdings nicht schnappverschlußartig in die Lagerausnehmungen ein, sondern bilden vielmehr zufolge einer beidseitigen Abflachung eine Art Bajonettverschluß, der zum Einsetzen der Achsstummel in die Lagerausnehmungen ein elastisches Durchbiegen des Bügels in einem Ausmaß erfordert, das den Einsatz üblicher Kunststoffe ausschließt, die wiederum Voraussetzung für die angestrebte, schnappverschlußartige Verriegelung sind.

Schließlich ist es bekannt (FR-A-2 626 682), den in eine Aufnahmetasche des Bügelbackens eingreifenden Scharnierlappen an einer federelastischen Zunge vorzusehen, die auf der Bügelinnenseite angeordnet ist, so daß der Bügelbakken zwischen der federelastischen Zunge und dem Bügel federnd eingespannt wird. Das Vorsehen von Federzungen ist jedoch aufwendig und bringt die Gefahr eines Bruches der Federzunge mit sich.

Der Erfindung liegt somit die Aufgabe zugrunde, ein Scharniergelenk der eingangs geschilderten Art mit einfachen konstruktiven Mitteln so auszugestalten, daß ein ungewolltes Ausrasten der Scharnierteile des Scharniergelenkes ausgeschlossen werden kann.

Die Erfindung löst die gestellte Aufgabe durch die im Kennzeichnenden Teil von Anspruch 1 angegebenen Merkmale.

Da die Lagerausnehmungen im Bereich des der Bügelinnenseite zugekehrten Umfangsabschnittes eine Einführöffnung für die Achsstummel bilden, können die Achsstummel in radialer Richtung in die Lagerausnehmungen eingedrückt werden, die somit sich über einen etwas größeren Winkel als 180° erstreckende Lagerschalen bilden. Im Gegensatz zu einem axialen Einrasten der Achsstummel bietet das radiale Einrasten in offene Lagerschalen den Vorteil, daß die Achsstummellänge unabhängig von den Einrastbedingungen gewählt werden kann, so daß sich die Achsstummel aufgrund ihrer größeren Länge ausreichend an der Wandung der Lagerausnehmungen abstützen können, um ein unbeabsichtigtes Lösen des Bügels vom Bügelbacken zu verhindern, wenn dafür Sorge getragen wird, daß die Achsstummel beim Überbiegen des Bügels über die Strecklage des Scharniergelenkes hinaus nicht aus der Einführöffnung der Lagerausnehmungen austreten können. Zu diesem Zweck ist für den Bügel in seiner Strecklage ein Anschlag mit einer quer zur Bügelachse verlaufenden Anschlagfläche auf dem Bügelbacken vorgesehen, an der sich der Bügel bei einer Bügelbelastung im Sinne eines Überbiegens des Scharniergelenkes abstützt. Bei einem Weiterschwenken des Bügels bildet demzufolge dieser Anschlag eine Drehabstützung für den Bügel. Da der auf diese Drehabstützung am Bügelanschlag bezogene Schwenkradius der Achsstummel mit der Austrittsrichtung der Achsstummel aus den Lagerausnehmungen einen größeren Winkel als 90° einschließt, müßte für einen möglichen Achsstummelaustritt aus der Lagerausnehmung der Bügel gegenüber dem Bügelbacken in Richtung der Bügelachse verlagert werden können. Eine solche Verlagerung des Bügels in Richtung seiner Achse wird jedoch durch den Bügelanschlag mit der quer zur Bügelachse verlaufenden Anschlagfläche ausgeschlossen. Aus diesem Grunde ist ein Ausrasten der Achsstummel aus den Lagerausnehmungen bei einem Überbiegen des Brillenbügels über die Strecklage des Scharniergelenkes hinaus nur nach einer Zerstörung des Scharniergelenkes durch ein Abbrechen der Achsstummel oder ein Ausbrechen der Lagerausnehmungen möglich.

Der Anschlag des Bügelbackens für den Bügel ist so ausgebildet, daß der Bügel auf der Außenseite einen gegen den Bügelbacken vorragenden Anschlaglappen trägt, der in eine seitliche Ausnehmung des Bügelbackens eingreift, wobei diese seitliche Ausnehmung mit ihrer den Anschlaglappen umfassenden Umfangswand den Anschlag für den Bügel bildet. Der Anschlaglappen deckt die Stoßfuge zwischen Bügelbacken und Bügel nach außen ab, was insbesondere bei einer gegebenenfalls vorgesehenen Neigungseinstellung des Bügels von besonderer Bedeutung ist, weil bei einer kreisbogenförmigen Umrißform des Anschlaglappens im Zusammenwirken mit einer gegengleichen Ausnehmung des Bügelbackens kein Keilspalt zwischen Bügel und Bügelbacken sichtbar wird. Die Neigungseinstellung kann in einfacher Weise durch ein entsprechendes Biegen des Scharnierlappens um eine Querachse zu den Achsstummeln erfolgen.

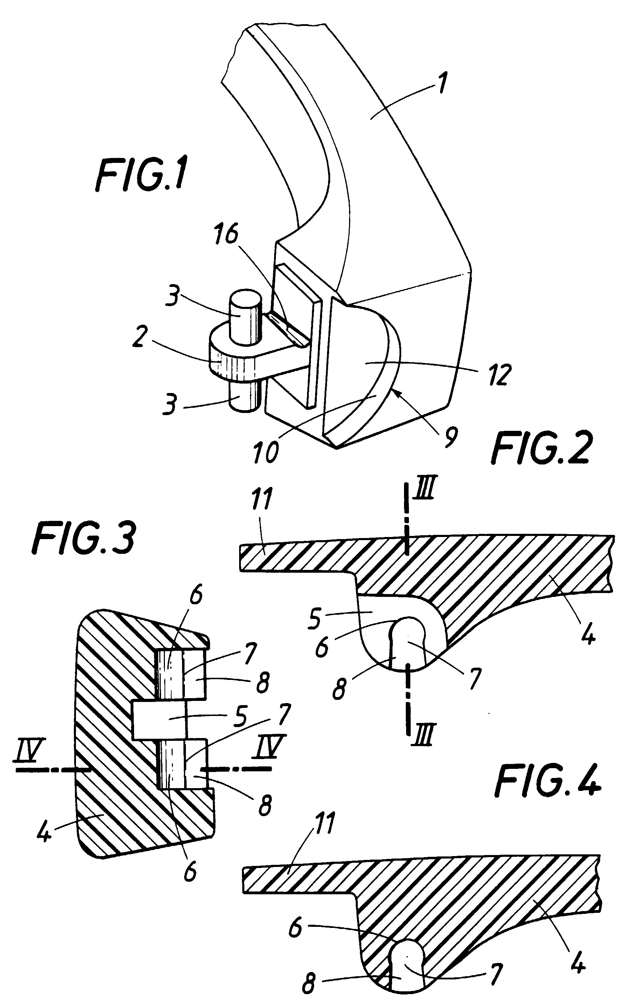

In der Zeichnung ist der Erfindungsgegenstand beispielsweise dargestellt. Es zeigen
- Fig. 1: den Bügelbacken eines erfindungsgemäßen Scharniergelenks in einem Schaubild,
- Fig. 2: das scharnierseitige Ende des Bügels in einem zur Scharnierachse senkrechten Längsschnitt,
- Fig. 3: einen Schnitt nach der Linie 111-111 der Fig. 2,
- Fig. 4: einen Schnitt nach der Linie IV-IV der Fig. 3,
- Fig. 5: einen achsnormalen Schnitt durch das zusammengesetzte Scharniergelenk und
- Fig. 6: eine zum Teil aufgerissene Ansicht des Scharniergelenkes von der Bügelinnenseite.

Das Scharniergelenk besteht gemäß dem dargestellten Ausführungsbeispiel im wesentlichen aus einem beispielsweise am Bügelbacken 1 vorgesehenen Scharnierlappen 2, der die Scharnierachse bildende Achsstummel 3 trägt, und aus einer im Bügel 4 vorgesehenen Aufnahmetasche 5 für den Scharnierlappen 2, wobei von dieser Aufnahmetasche 5 zwei Lagerausnehmungen 6 für die Achsstummel 3 ausgehen. Die Lagerausnehmungen 6 sind in einem der Bügelinnenseite zugekehrten Umfangsbereich zur Bildung einer radialen Einführöffnung 7 offen ausgebildet, so daß beim Zusammenstecken der Scharnierteile die Achsstummel 3 in radialer Richtung in die Lagerausnehmungen 6 einrasten, die demnach Lagerschalen bilden, die sich über einen Winkel etwas größer als 180° erstrecken, um ein schnappverschlußartiges Einrasten der Achsstummel 3 in die Lagerausnehmungen 6 sicherzustellen. Der Durchmesser der Achsstummel 3 muß hiefür geringfügig größer als die lichte Weite der Einführöffnung 7 sein, der zum einfacheren Zusammenfügen der Scharnierteile ein Einführschlitz 8 vorgelagert wird, was jedoch nicht zwingend ist.

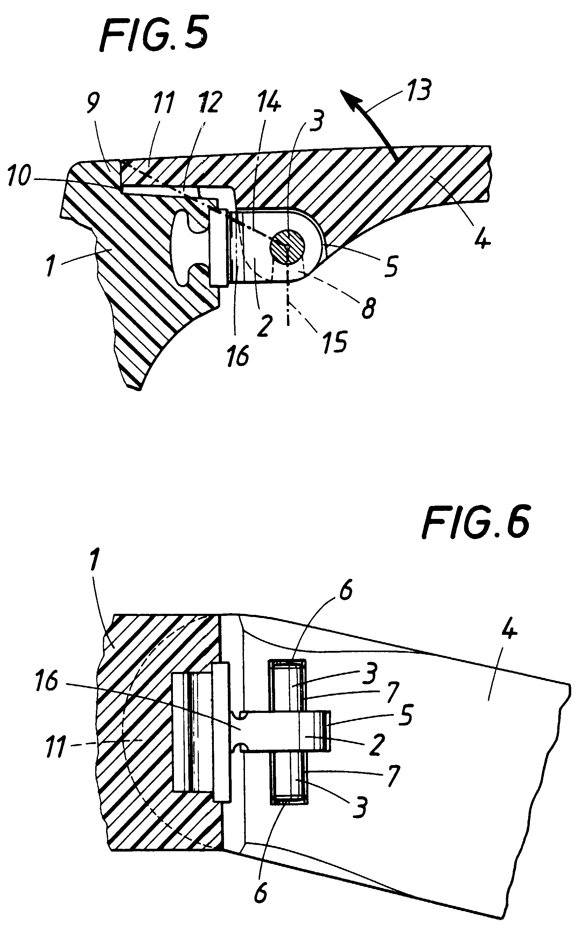

Zum Zusammenfügen der Scharnierteile wird der Bügel 4 in Richtung des Einführschlitzes 8 auf den Scharnierlappen 2 mit den Achsstummeln 3 aufgedrückt, wobei die Achsstummel 3 in die lagerschalenförmigen Lagerausnehmungen 6 einrasten und dort schnappverschlußartig festgehalten werden. Die axiale Lagesicherung der Achsstummel wird über den in die Aufnahmetasche 5 eingreifenden Scharnierlappen 2 erreicht, wie dies insbesondere der Fig. 6 entnommen werden kann.

Um zu verhindern, daß bei einem Überbiegen des Bügels über die in der Fig. 5 gezeichnete Strecklage des Scharniergelenkes hinaus die Achsstummel 3 aus den Lagerausnehmungen 6 austreten können, weist der Bügelbacken 1 einen Anschlag 9 mit einer quer zur Bügelachse ausgerichteten Anschlagfläche 10 auf, die mit einem Anschlaglappen 11 auf der Außenseite des Bügels 4 zusammenwirkt. Dieser Anschlaglappen 11 besitzt die Umrißform eines Kreisbogens und greift in eine gegengleiche Ausnehmung 12 des Bügelbackens 1 ein, wobei die Anschlagfläche 10 durch die Umfangswandung des Ausnehmung 12 gebildet wird.

Wird der Bügel 4 im Sinne eines Überbiegens seiner Strecklage gemäß dem Pfeil 13 belastet, so würde der Anschlag 9 bei einem möglichen Austritt der Achsstummel 3 aus den Lagerausnehmungen 6 eine Drehabstützung für den Bügel 4 bilden. Der zugehörige Schwenkradius 14 der Achsstummel 3 schließt jedoch mit der quer zur Bügelachse verlaufenden Austrittsrichtung 15 der Achsstummel durch die Einführöffnung 7 einen größeren Winkel als 90° ein, so daß nur dann ein Austritt der Achsstummel aus ihren Lagerausnehmungen möglich wäre, wenn sich zugleich der Bügel 4 in Richtung der Bügelachse gegenüber dem Bügelbacken 1 verlagern könnte, wie dies bei einer Anschlagfläche in Richtung der Bügelachse der Fall wäre. Diese Verlagerung wird jedoch durch die quer zur Bügelachse verlaufende Anschlagfläche 10 ausgeschlossen, so daß ein Achsstummelaustritt aus den Lagerausnehmungen und damit ein Auseinanderfallen des Scharniergelenkes unmöglich wird, zumal sich aufgrund der vergleichsweise großen Länge der Achsstummel eine ausreichende Abstützung an der Wandung der Lagerausnehmungen ergibt. Die Einführöffnung 7 mit dem Einführschlitz 8 kann folglich quer zur Bügelachse verlaufen, was besonders einfache Bedingungen für die Form zur Herstellung eines solchen Bügels gewährleistet.

Die Neigung des Bügels 4 gegenüber dem Bügelbacken 1 kann zusätzlich eingestellt werden, und zwar über ein durch eine Querschnittsschwächung erhaltenes Biegegelenk 16 des Scharnierlappens 2. Die zur Achse der Achsstummel 3 senkrechte Achse dieses Biegegelenkes 16 bildet den Mittelpunkt des Umfangskreises für den Anschlaglappen 11 bzw. die Ausnehmung 12 des Bügelbackens 1, so daß sich bei einer Neigungseinstellung zwischen dem Anschlaglappen 11 und der Ausnehmung 12 kein Randspalt ergeben kann.

Die Erfindung ist selbstverständlich nicht auf das dargestellte Ausführungsbeispiel beschränkt. So könnte an Stelle eines in den Bügelbacken 1 aus Kunststoff eingespritzten metallischen Scharnierlappens ein am Bügelbacken 1 angeformter Scharnierlappen aus Kunststoff treten. Es wäre aber auch möglich, den Scharnierlappen dem Bügel 4 zuzuordnen, was eine Anordnung der Aufnahmetasche 5 und der Lagerausnehmungen 6 im Bügelbacken zur Folge hätte, und zwar auf dessen Außenseite.

## Patentansprüche

1. Scharniergelenk zwischen zwei Teilen eines Brillengestells, mit einem Bügel (4) und einem Bügelbacken (1), mit einem an einem der beiden Teile angeordneten, gegen den anderen Teil vorragenden und in eine Aufnahmetasche (5) dieses anderen Teiles eingreifenden Scharnierlappen (2), der eine Scharnierachse bildende Achsstummel (3) trägt, und mit von der Aufnahmetasche (5) ausgehenden, kreiszylindrischen Lagerausnehmungen (6) mit einer Einführöffnung (7) zur schnappverschlußartigen Aufnahme der Achsstummel (3), wobei der Bügelbacken (1) einen stirnseitigen Anschlag (9) für den Bügel (4) in der Strecklage des Scharniergelenkes aufweist, dadurch gekennzeichnet, daß die Lagerausnehmungen (6) in einem der Bügelinnenseite zugekehrten Umfangsabschnitt von weniger als 180° zur Bildung der Einführöffnung (7) und des Schnappverschlusses für die Achsstummel (3) offen sind, deren axiale Länge ihren Durchmesser übersteigt, daß der Bügel (4) auf der Außenseite einen gegen den Bügelbacken (1) vorragenden Anschlaglappen (11) trägt, der in eine seitliche Ausnehmung (12) des Bügelbackens (1) eingreift, und daß die seitliche Ausnehmung (12) mit ihrer den Anschlaglappen (11) umfassenden Umfangswand den Anschlag (9) für den Bügel (4) bildet.

2. Scharniergelenk nach Anspruch 1, dadurch gekennzeichnet, daß der Anschlaglappen (11) und die seitliche Ausnehmung (12) des Bügelbackens (1) eine kreisbogenförmige Umrißform aufweisen.

## Claims

1. A hinge joint between two parts of a spectacles frame, with a temple (4) and a temple cheek (1), with a hinge lug (2) disposed on one of the two parts, projecting towards the other part, and engaging in a receiving pocket (5) of said other part, said lug carrying an axle stub (3) which forms a hinge pivot, and with circular cylindrical bearing recesses (6) extending from the receiving pocket (5), with an entry opening (7) to accommodate the axle stubs (3) after the style of a snap fastener, the temple cheek (1) having an end stop (9) for the temple (4) in the extended position of the hinge joint, characterised in that the bearing recesses (6) are open, in a peripheral section of less than 180° facing the temple inside, in order to form the entry opening (7) and the snap fastener for the axle stubs (3), the axial length of which exceeds their diameter, in that the temple (4) carries on the outside a stop lug (11) projecting towards the temple cheek (1) and engaging in a lateral recess (12) of the temple cheek (1), and in that the lateral recess (12) together with its peripheral wall enclosing the stop lug (11) forms the stop (9) for the temple (4).

2. A hinge joint according to claim 1, characterised in that the stop lug (11) and the lateral recess (12) of the temple cheek (1) have a contour in the form of an arc of a circle.

## Revendications

1. Articulation à charnière entre deux parties d'une monture de lunettes, à savoir une face de monture (4) et une branche (1), comprenant une patte de charnière (2) qui est disposée sur l'une des deux parties, qui fait saillie vers l'autre partie, qui pénètre dans un logement (5) de cette autre partie et qui porte un pivot (3) formant un axe de charnière, et comprenant des évidements formant paliers (6) qui sont cylindriques de révolution, qui partent du logement (5) et qui sont pourvus d'une ouverture d'introduction (7) destinée à recevoir le pivot (3) à la manière d'un maintien par encliquetage, la branche (1) présentant une butée frontale (9) qui est destinée au corps de monture (4) dans la position ouverte de l'articulation à charnière, caractérisée par le fait que les évidements formant paliers (6) sont ouverts sur une partie de leur pourtour qui est inférieure à 180° et qui est tournée vers le côté intérieur de la face de monture pour former l'ouverture d'introduction (7) et le confinement par encliquetage du pivot (3) dont la longueur dans le sens axial dépasse son diamètre, par le fait que la face de monture (4) porte sur son côté extérieur une patte formant butée (11) qui fait saillie vers la branche (1) et qui pénètre dans un évidement latéral (12) de la branche (1), et par le fait que l'évidement latéral (12) forme la butée (9) destinée à la face de monture (4) par la paroi de son pourtour qui entoure la patte formant butée (11).

2. Articulation à charnière selon la revendication 1, caractérisée par le fait que la patte formant butée (11) et l'évidement latéral (12) de la branche (1) présentent un contour en forme d'arc de cercle.
